(19) **Europäisches Patentamt / European Patent Office / Office européen des brevets**

(11) **EP 4 381 242 B1**

(12) **EUROPEAN PATENT SPECIFICATION**

(45) Date of publication and mention
of the grant of the patent:
**31.07.2024 Bulletin 2024/31**

(21) Application number: **22730901.0**

(22) Date of filing: **30.05.2022**

(51) International Patent Classification (IPC):
**G01B 7/06** *(2006.01)* **G01D 3/028** *(2006.01)*
**G01B 5/00** *(2006.01)* **G01B 11/06** *(2006.01)*
**G01B 15/02** *(2006.01)*

(52) Cooperative Patent Classification (CPC):
**G01B 11/0616; G01B 5/0014; G01B 15/02;**
G01D 3/0365

(86) International application number:
**PCT/EP2022/064652**

(87) International publication number:
**WO 2023/193933 (12.10.2023 Gazette 2023/41)**

(54) **CONTACTLESS DETERMINING A PHYSICAL FEATURE OF A TARGET ITEM**

KONTAKTLOSE BESTIMMUNG EINES PHYSIKALISCHEN MERKMALS EINES ZIELELEMENTS

DÉTERMINATION SANS CONTACT D'UNE CARACTÉRISTIQUE PHYSIQUE D'UN ÉLÉMENT CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2022 EP 22382343**

(43) Date of publication of application:
**12.06.2024 Bulletin 2024/24**

(73) Proprietor: **Das-Nano Tech, S.L.**
**31192 Tajonar (ES)**

(72) Inventors:
• **SUBIZA GARCÍA, Mikel**
**31192 Tajonar (ES)**
• **MIRANDA SANTAFÉ, Luis**
**31192 Tajonar (ES)**
• **INÉS ORTIGOSA, Andrea**
**31192 Tajonar (ES)**
• **CASTRILLO CUARTANGO, Mónica**
**31192 Tajonar (ES)**
• **MARTÍNEZ DE MORENTIN SUESCUN, Cristian**
**31192 Tajonar (ES)**
• **TABOADA CABELLOS, Elena**
**31192 Tajonar (ES)**

• **AZANZA LADRÓN, Eduardo**
**31620 Gorraiz (ES)**
• **PERCAZ CIRIZA, Jon Mikel**
**31006 Pamplona (ES)**
• **ARNEDO GIL, Israel**
**31192 Tajonar (ES)**

(74) Representative: **ZBM Patents - Zea, Barlocci & Markvardsen**
**Rambla Catalunya, 123**
**08008 Barcelona (ES)**

(56) References cited:
WO-A1-2019/073074    WO-A1-2022/033710
WO-A1-89/12281    US-A1- 2015 211 934
US-A1- 2021 310 796

• ELLRICH F ET AL: "Terahertz Quality Inspection for Automotive and Aviation Industries", JOURNAL OF INFRARED, MILLIMETER AND TERAHERTZ WAVES, SPRINGER NEW YORK LLC, US, vol. 41, no. 4, 26 November 2019 (2019-11-26), pages 470 - 489, XP037106915, ISSN: 1866-6892, [retrieved on 20191126], DOI: 10.1007/S10762-019-00639-4

## Description

This application claims the benefit of European Patent Application EP22382343.6 filed 08 April 2022.

The present disclosure relates to systems for contactless determining a physical feature of a target item. The present disclosure further relates to methods performable in or by such systems, and to computer programs suitable for performing said methods.

## BACKGROUND

There exist measuring systems configured to determine physical features of a target item, such as e.g. thicknesses of multilayer materials, electrical parameters, defect presence, etc. in a non-contact and non-destructive way. Examples of defects to be detected are, e.g., corrosion, improper holes, improper discontinuities, improper lack of painting, etc. More specifically, radiation-based technologies (e.g. terahertz technologies) have proved to be very suitable in industrial fields, such as e.g. automotive and painting industry.

In such contactless measuring systems, a scanner unit is normally configured to operate at a predefined position or distance with respect to the target item to be inspected. Measuring systems of this type may include a position or distance sensor or measurer configured to monitor the distance (or variations thereof) between the scanner unit and the target item. Then, the measuring performed by the scanner unit may be corrected, discarded, restarted, etc. depending on the distance (and variations thereof) measured by the position or distance sensor or measurer.

These contactless measuring systems with monitoring of the relative position or distance between the scanner unit and the target item may face different difficulties. Best performance of these contactless detectors is achieved using reference measurements with no variations of the relative position or distance between scanner unit and target item, which may be very difficult to achieve in a non-stop production line environment. Also, these contactless distance sensors are sensible to the reflection surface type. Furthermore, known distance detectors or measurers are complex and expensive.

The document US2015/211934 A1 discloses a system for contactless determining a physical feature of a target item according to the state of the art.

An object of the disclosure is to provide new methods, systems and computer programs aimed at solving at least some of the aforementioned problems.

## SUMMARY

In an aspect, systems are provided for contactless determining a physical feature of a target item. Such systems (also denominated contactless determiners herein) comprise a scanner unit, a detector unit and a determiner unit. The scanner unit is a terahertz scanner unit and is configured to operate according to or at a relative position between the target item and the scanner unit, said operation including emitting a terahertz scanning radiation onto the target item and measuring an interaction radiation caused by interaction of the terahertz scanning radiation with the target item. The detector unit includes one or more vibration measurers couplable to a supporting system configured to support or hold the target item or to a positioning system configured to position the scanner unit in or at the relative position, so as to measure vibrations at the supporting system or the positioning system as part of a condition potentially distorting the operation of the scanner unit. The determiner unit is configured to determine the physical feature of the target item depending on the interaction radiation measured by the scanner unit and the potentially distorting condition measured by the detector unit.

The measuring of the potentially distorting condition (by the detector unit) is performed irrespective of the relative position (or variations thereof) means herein that said measuring is limited to quantify physical conditions other than those directly denoting (or reflecting) the relative position or variations thereof. An example of measurement directly denoting the relative position or variations thereof may be distance measurement between the scanner unit and the target item. Measurement of the distance directly indicates whether the relative position (needed by the scanner to operate) is respected or unduly disrespected or varied or altered. An example of measurement irrespective of the relative position (or variations thereof) may be, e.g., vibration(s) affecting the target item and/or the scanner unit, temperature, humidity, etc. which quantify physical conditions that may influence the determination of the physical feature, but with no measure of the relative position of the scanner unit with respect to the target item. Such measurements irrespective of the relative position may be also denominated herein indirect (or non-distance based) measurements, since they may be seen as indirect or environmental measurements related to the relative position, i.e. potentially affecting the relative position but without any direct measurement of the relative position. With such indirect or environmental or non-distance based measurements, simpler and less expensive sensors may be enough to detect potentially distorting conditions and, therefore more efficient contactless determiners may be provided at least economically. The concept of indirect measurements may also be understood herein as an estimation or obtaining of information about a variable (e.g., distance or relative position between scanner unit and target item) that is not directly measured.

The suggested contactless determiners permit accurately determining physical features of a target item without using complex and expensive distance detectors. Experiments performed by the inventors have proved that said proposed contactless determiners may operate more efficiently with same or similar reliability as prior art contactless determiners based on distance detectors to monitor that predefined relative position (of the scanner unit with respect to the target item) is kept under certain permissible variability. The disclosed contactless determiners are also very cost-efficient since they avoid using complex and expensive contactless distance measurers. Instead of that, such contactless determiners measure "environmental" conditions such as, e.g., vibration affecting scanner unit and/or target item, temperature, humidity, etc.

According to some implementations, the determiner unit may be configured to determine the physical feature of the target item according to either a single distortional approach, or an unalterable interaction approach, or a double distortional approach.

The single distortional approach may include first adjusting the interaction radiation depending on the potentially distorting condition, and second determining the physical feature of the target item depending on the adjusted interaction radiation. This denomination of single distortional approach refers to that the potentially distorting condition is used once, only to adjust the interaction radiation, and it is not used to determine the physical feature which is performed depending on the adjusted interaction radiation, i.e. on the interaction radiation once adjusted depending on the potentially distorting condition.

The unalterable interaction approach may include keeping the interaction radiation unaltered (i.e. as measured by the scanner unit) and determining the physical feature of the target item depending on the unaltered interaction radiation and the potentially distorting condition. This denomination of unalterable interaction approach refers to that the interaction radiation measured by the scanner unit is kept unaltered and used to determine the physical feature further depending on the potentially distorting condition.

The double distortional approach may include adjusting the interaction radiation depending on the potentially distorting condition and determining the physical feature of the target item depending on both the adjusted interaction radiation and the potentially distorting condition. This denomination of double distortional approach refers to that the potentially distorting condition is used twice, firstly to adjust the interaction radiation (depending on the potentially distorting condition) and secondly to determine the physical feature of the target item (depending on the adjusted interaction radiation and, again, on the potentially distorting condition).

Aforementioned approaches including the adjusting of the interaction radiation may comprise determining whether a part of the measured potentially distorting condition is outside acceptability threshold or range (and, therefore, corresponds to an unacceptable distortion), determining which part of the interaction radiation corresponds in time to (i.e. has been measured at same time as) said unacceptable distortion, and discarding said part of the interaction radiation from the adjusted interaction radiation. In other words, interaction radiation part or parts measured by the scanner unit under what is considered excessively distorting condition or conditions may be discarded. Interaction radiation part or parts may be qualified as acceptable or unacceptable depending on experimentally and/or theoretically predefined criteria (e.g. depending on experimentally and/or theoretically predefined acceptability threshold or range). This manner, bad measurements of the interaction radiation may be ignored in the determination of the physical feature and, hence, more reliable results may be obtained with such an avoidance of intolerable distorting condition or conditions.

The determiner unit may be further configured to verify whether a ratio or accumulation or distribution of discarded part or parts of the interaction radiation is outside admissibility threshold or range and, in said case, to trigger operation of the scanner unit to measure a new interaction radiation and, therefore, repeat whole operation cycle of the contactless determiner. In other words, if excessive parts or most meaningful parts of the interaction radiation have been discarded, whole interaction radiation measured by the scanner unit may be discarded and, in said case, scanner unit may be triggered to restart operation cycle of the contactless determiner.

Approaches including adjustment of the interaction radiation may comprise determining whether a part of the potentially distorting condition is within acceptability threshold or range (and, hence, corresponds to acceptable distortion), determining which part of the interaction radiation corresponds in time to (i.e. has been measured at same time as) said acceptable distortion, and modulating said part of the interaction radiation depending on said acceptable distortion. Such a modulation may be performed by applying to said part of the interaction radiation (occurred under acceptable distortion) a correction factor or offset depending on the acceptable distortion. Different correction factors or offsets may be predefined depending on different expected acceptable distortions, and one of said correction factors or offsets may be selected depending on the particular acceptable distortion measured and accordingly applied to the interaction radiation occurred or measured at same time as the acceptable distortion. Each complete or partial interaction radiation simultaneously measured with complete or partial acceptable distortion may be modulated (e.g., by using a correction factor) to a greater or lesser extent depending on whether the simultaneously measured complete or partial acceptable distortion is greater or lesser, respectively. This manner of modulating complete or partial interaction radiations may be denominated point-to-point correction in the sense that differently distorted complete or partial interaction radiations are modulated differently depending on how much it is or may be distorted. This point-to-point correction may be performed in real time, i.e. as complete or partial interaction radiations and associated distortions are being simultaneously measured.

Approaches with adjustment of the interaction radiation may comprise determining whether a part of the potentially distorting condition is inside negligibility threshold or range (and, thus, corresponds to a negligible distortion), determining which part of the interaction radiation corresponds in time to (i.e. has been measured at same time as) said negligible distortion, and keeping said part of the interaction radiation unaltered in the adjusted interaction radiation. Then, the physical feature of the target item may be determined depending on the unaltered interaction radiation and the potentially distorting condition by, e.g., processing the unaltered interaction radiation based on applying a reparation factor or offset depending on the negligible distortion. Same or similar principles as commented in other parts of the disclosure regarding predefined factors or offsets may be applied to these reparation factors or offsets predefined in case of negligible distortion. In general, in any of the aforementioned approaches (i.e. single distortional approach, unalterable interaction approach, double distortional approach), the determiner unit may determine the physical feature of the target item depending on the unaltered or adjusted interaction radiation and the potentially distorting condition by processing the unaltered or adjusted interaction radiation depending on the potentially distorting condition. In particular, said processing may be based on applying a reparation or correction factor or offset depending on the potentially distorting condition.

Therefore, according to the aforementioned approaches (i.e. single distortional approach, unalterable interaction approach, double distortional approach), the determiner unit may comprise an interaction radiation conditioner and a feature determiner. The interaction radiation conditioner may be configured to adjust the interaction radiation depending on non-negligible distortion, or to keep the interaction radiation unaltered (e.g., in case of negligible distortion). And the feature determiner may be configured to determine the physical feature of the target item depending only on the adjusted interaction radiation (single distortional approach), or on the unaltered interaction radiation and the potentially distorting condition (unalterable interaction approach), or on the adjusted interaction radiation and the potentially distorting condition (double distortional approach).

In some examples, the determiner unit may include a machine learning module (e.g., a neural network) trained or trainable with data samples (e.g., experimentally and/or theoretically determined) as input of the machine learning module along with pre-known feature of the target item as expected output for said input. Large quantities of such input data samples that are known to produce the pre-known feature may be used to train the machine learning module. These input data samples may include (many) different combinations of interaction radiations and potentially distorting conditions. Such different combinations may further include specification (or specs) data characterizing the target item which are known to influence the determination of the pre-known feature. Pre-know features, each with its associated input data samples, may be used so as to cover specification data characterizing the target item that are known to influence the output of the machine learning module, i.e. the determiner unit. Such characterizing data may refer to, e.g., material of the target item, surface curvature to be scanned, number of layers to be inspected, type of material of the layers, etc.

Pre-known measurements or signals outputted (or to be outputted) by scanner unit and detector unit under ideal conditions may be used as initial input data samples. Such ideal conditions may refer to measurements or signals outputted (or to be outputted) by detector unit (e.g. vibrations, temperature, humidity, etc.) which do not cause any change in/on measurements or signals outputted (or to be outputted) by scanner unit. Subsequently, said measurements or signals outputted (or to be outputted) by detector unit may be varied to cause a large number of combinations of potentially distorting signals, at different degrees, and scanner signals. These different degrees may refer to intensities, variation rates, etc. that may be applicable to vibrations, temperature, humidity, etc. This training approach may permit generating large quantities of training scenarios that may cause the machine learning module (i.e. the determiner unit) to behave very accurately and/or reliably.

Logics or criteria or rules described in other parts of the disclosure used to determine the physical feature of the target item may be directly or indirectly implemented by or through the proposed machine learning module and corresponding training thereof. In a direct approach, the machine learning module may be trained to directly output the feature of the target item to be determined. Additionally or alternatively, the machine learning module may be trained to output the data intervening in the determination of the feature of the target item such as, e.g., any of the thresholds, adjustments, corrections, modulations, non-alterations, etc. described in other parts of the disclosure. Thus, in an indirect approach, the determiner unit may use said intervening data outputted by the machine learning module to implement the logics or criteria or rules described in other parts of the disclosure as generators of the feature of the target item to be determined.

Contactless determiners according to present disclosure may be further configured to perform the training of the machine learning module as described in other parts of the disclosure.

Machine learning module (e.g., neural network) may be trainable or trained, in the context(s) described before or similar, with totally, more, less, not at all favourable distorting conditions covering all or maximum number of possible, forecasted, expected scenarios. Alternatively to direct and indirect approaches described in other parts of the disclosure, machine learning module may be trained to classify complete or partial distorting conditions (or measurements/signals) as acceptable, unacceptable, negligible, etc. and/or corresponding complete or partial interaction radiations (or measurements/signals) as to be discarded, kept unaltered, adjusted, modulated, etc. These classifications may then be used at determiner unit to determine the feature of the target item depending on them.

The supporting system may be, e.g., a transport system or may be coupled to a transport system. The transport system may be configured to, e.g., displace or move the target item directly or indirectly through the supporting system. The transport system may be configured to, e.g., perform such a displacement of the target item in a production line directly or indirectly through the supporting system. Contactless determiners according to present disclosure may further include the supporting system and/or the positioning system.

Vibration measurers may be, in some examples, coupled or couplable additionally to any element other than supporting system and/or positioning system but whose vibration may influence or distort operation of the scanner unit with the target item.

The detector unit may further include one or more temperature measurers that are associable to or arrangeable at the target item and/or at a vicinity of the target item and/or at an environment including the target item. Said one or more temperature measurers may be configured to detect a temperature condition included or includable in the potentially distorting condition.

The detector unit may further include one or more humidity measurers that are associable to or arrangeable at the target item and/or at a vicinity of the target item and/or at an environment including the target item. These one or more humidity measurers may be configured to detect a humidity condition included or includable in the potentially distorting condition.

The target item may be, in some examples, a coating of a coated object which may include one or more coating layers. The physical feature (to be determined by corresponding contactless determiner) may be or may include a layer condition of the one or more coating layers. Such a layer condition may be or may include, e.g., thickness of the one or more coating layers. Said thickness (to be determined by corresponding contactless determiner) may be overall thickness of the coating or thickness of each of the layer(s) forming the coating.

Alternatively or additionally to characterizing a coating (measuring layer thicknesses) as commented before, many other physical features of a target item may be determined with proposed contactless determiners according to present disclosure. These other applications may include, e.g., determining electrical parameters, detecting defects, etc. Determining electrical parameters may include determining a map of electrical parameters, a conductivity map, etc. of the target item such as, e.g., a thin film. Detecting defects may include, e.g., detecting corrosion, abrasion, improper holes, improper discontinuities, improper lack of painting, etc. in/on the target item.

In a further aspect, methods are provided of contactless determining a physical feature of a target item. Such methods (also denominated contactless determination methods herein) include operating a scanner unit, which is a terahertz scanner unit, according to a relative position between the target item and the scanner unit, said operation including emitting a terahertz scanning radiation onto the target item and measuring an interaction radiation caused by interaction of the terahertz scanning radiation with the target item. Contactless determination methods further include operating a detector unit including one or more vibration measurers coupled to a supporting system to support or hold the target item or to a positioning system to position the scanner unit in or at the relative position, so as to measure vibrations at the supporting system or the positioning system as part of a condition potentially distorting the operation of the scanner unit. Contactless determination methods still further include operating a determiner unit to determine the physical feature of the target item depending on the interaction radiation (measured by the scanner unit) and the potentially distorting condition (measured by the detector unit).

In a still further aspect, a computer program is provided comprising program instructions for causing a system or computing system to perform methods of contactless determining a physical feature of a target item, such as the ones described in other parts of the disclosure. The computer program may be embodied on a storage medium and/or carried on a carrier signal.

In a still further aspect, a computing system is provided for contactless determining a physical feature of a target item, the computing system comprising a memory and a processor, embodying instructions stored in the memory and executable by the processor, and the instructions comprising functionality or functionalities to execute methods of contactless determining a physical feature of a target item, such as the ones described in other parts of the disclosure.

BRIEF DESCRIPTION OF THE DRAWINGS

Non-limiting examples of the disclosure will be described in the following, with reference to the appended drawings, in which:

Figure 1 is a block diagram schematically illustrating systems for contactless determining a physical feature of a target item according to examples.

Figure 2 is a flow chart schematically illustrating methods of contactless determining a physical feature of a target item according to examples.

Figures 3A - 3C schematically illustrate terahertz-based measurements taken by scanner unit, possibly distortional measurements taken by detector unit, and consequent actions taken by determiner unit, according to examples.

DETAILED DESCRIPTION OF EXAMPLES

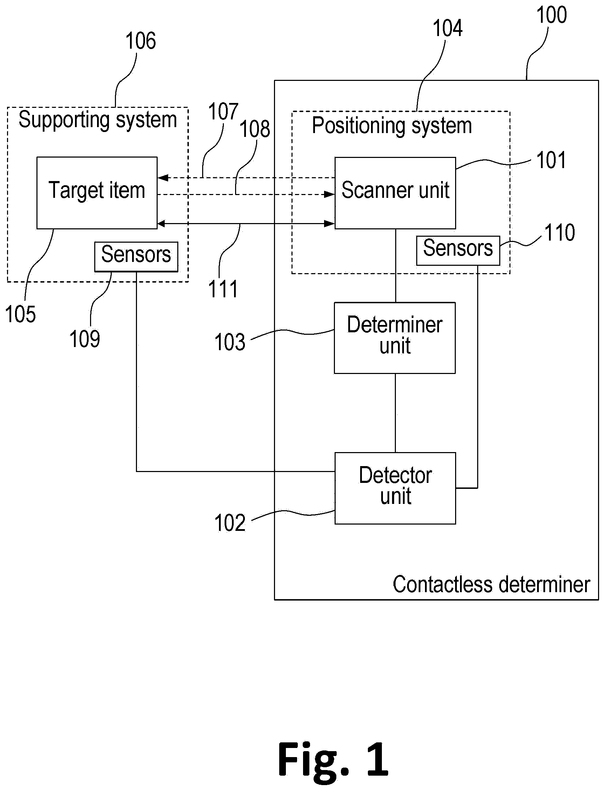

Figure 1 is a block diagram schematically illustrating systems for contactless determining a physical feature of a target item according to examples. As generally shown in the figure, such contactless systems or determiners 100 include a scanner unit 101, a detector unit 102 and a determiner unit 103. The scanner unit 101 is a terahertz scanner unit and is configured to operate according to a relative position or distance 111 between the target item 105 and the scanner unit 101. Operation by the scanner unit 101 includes emitting a terahertz scanning radiation 107 onto the target item 105 and measuring an interaction radiation 108 caused by interaction of the terahertz scanning radiation 107 with the target item 105. The relative position of the scanner unit 101 with respect to target item 105 may be such that the scanning radiation 107 is emitted onto the target item 105 perpendicularly.

The detector unit 102 includes one or more vibration measurers or sensors 109, 110 couplable to a supporting system 106 configured to support or hold the target item 105 or to a positioning system 104 configured to position the scanner unit 101 in or at the relative position 111, so as to measure vibrations at the supporting system 106 or at the positioning system 104 as part of a condition potentially distorting the operation by the scanner unit 101. The determiner unit 103 is configured to determine the feature of the target item 105 depending on the interaction radiation 108 measured by the scanner unit 101 and the potentially distorting condition measured by the detector unit 102.

Scanner unit 101 is a terahertz scanner unit. Target item 105 may a coating (of a coated object) that may include one or more coating layers. In this scenario, the physical feature (to be determined) may be or may include a layer condition of the coating layer(s) forming the coating to be inspected. In particular, the layer condition may be or may include a thickness of the whole coating layer(s) or of each of the coating layer(s).

In the particular example(s) of Figure 1, scanner unit 101 is shown configured to operate according to reflection approach, i.e. scanning radiation 107 is reflected by/at/on target item 105 such that interaction radiation 108 is caused by said reflection. However, scanner unit 101 may also be configured to operate according to transmission approach, i.e. scanning radiation 107 is transmitted by/through target item 105 such that interaction radiation 108 is caused by said transmission. In transmission approach, scanning radiation 107 may be emitted (by, e.g., an emitter of the scanner unit 101) from first side relative to target item 105, and interaction radiation 108 may be measured (by, e.g., a sensor or measurer of the scanner unit 101) at second side that may be opposite to first side. Such first and second sides may be any sides relative to target item 105 whenever scanner unit 101 can measure interaction radiation 108 resulting from transmission of the scanning radiation 107 by/through target item 105.

Contactless determiners 100 may be configured to inspect or analyse target item 105 according to point approach, or line approach, or area approach, etc. Point or zero-dimensional approach refers to inspect target item 105 at/on one point thereof. Line or one-dimensional approach refers to inspect target item 105 at/on one line thereof. Area or two-dimensional approach refers to inspect target item 105 at/on one area thereof. In contactless determiners 100 configured to implement line approach or area approach, a positioning system (such as the ones commented in other parts of the disclosure) may be configured to position scanner unit 101 to inspect points conforming corresponding line or area on a per point basis. In other words, line or area approach may be implemented by performing a point-by-point inspection until line or area is fully inspected. Contactless determiners 100 may also be configured to inspect target item 105 at/on several points thereof that may not necessarily conform a line or area but, instead, said several points to be inspected may be separated or dispersed points of the target item 105.

Point, line or area approach may be used depending on the feature or features of the target item to be determined. Point approach may be used to, e.g., determine layer thicknesses of a coating in/on one point or several points of the target item (e.g. car body). Area approach may be used to, e.g., determine a conductivity map of the target item. Area or line approach may be used to, e.g., determine defect(s) such as ,e.g., hole(s) or gap(s) or corrosion effect(s) or any other imperfection(s) detectable based on information of several or many points of the target item as a whole, i.e. when detection may need inspection of several or many points.

As generally shown in Figure 1, contactless determiners according to present disclosure may further include temperature measurer(s), and/or humidity measurer(s), and/or any type of measurer(s) configured to monitor or quantify any "environmental" condition potentially influencing operation of the scanner unit 101 under interaction with the target item 105.

Supporting system 106 may be a transport system or may be coupled or couplable to pertinent transport system configured to displace the target item directly or indirectly through the supporting system. Transport system may be included or includable in a production line to displace the target item 105 directly or indirectly through the supporting system along the production line. Vibration sensors 109 may thus be arranged or arrangeable at some or each of said supporting, transporting, production line (, etc.) parts.

Positioning system 104 may be configured to position the scanner unit 101 at the relative position (required by the scanner unit 101 to operate) with respect to the target item 105. Positioning system 104 may be a robotic system with corresponding robot base, robot arm, etc. Vibration sensors 110 may thus be arranged or arrangeable at some of said robotic parts or each of said robot parts.

Temperature measurer(s) and/or humidity measurer(s) may be associable (or linkable or couplable) to, or arrangeable (or disposable or placeable) at the target item 105, and/or at a vicinity of the target item 105, and/or at an environment including or surrounding the target item 105. Temperature measurer(s) may be configured to detect temperature condition(s) that may correspond to potentially distorting condition(s). Humidity measurer(s) may be configured to detect humidity condition(s) which may correspond to potentially distorting condition(s). In the particular example(s) of Figure 1, measurers 109, 110 are shown linked to target item 105 and scanner unit 101, respectively, or corresponding auxiliary system 106, 104. However, temperature and/or humidity measurer(s) may be arranged in any other position(s) where temperature and/or humidity influencing operation of scanner unit 101 with target item 105 may be measured.

Temperature measurer(s) and/or humidity measurer(s) may be arranged or arrangeable as described in other parts of the disclosure to detect environmental conditions at different locations of the contactless determiner 100, target item 105, supporting and/or transport system 106, positioning system 104, etc. Temperature and/or humidity variations my depend on different factors such as seasonal and daily variations, production operation (workload), line setup (proximity of heat sources), etc. Variation rate of these variables may thus determine necessary refresh and/or measuring period, but in principle it may not require measurements simultaneous to measurements taken by the scanner unit 101.

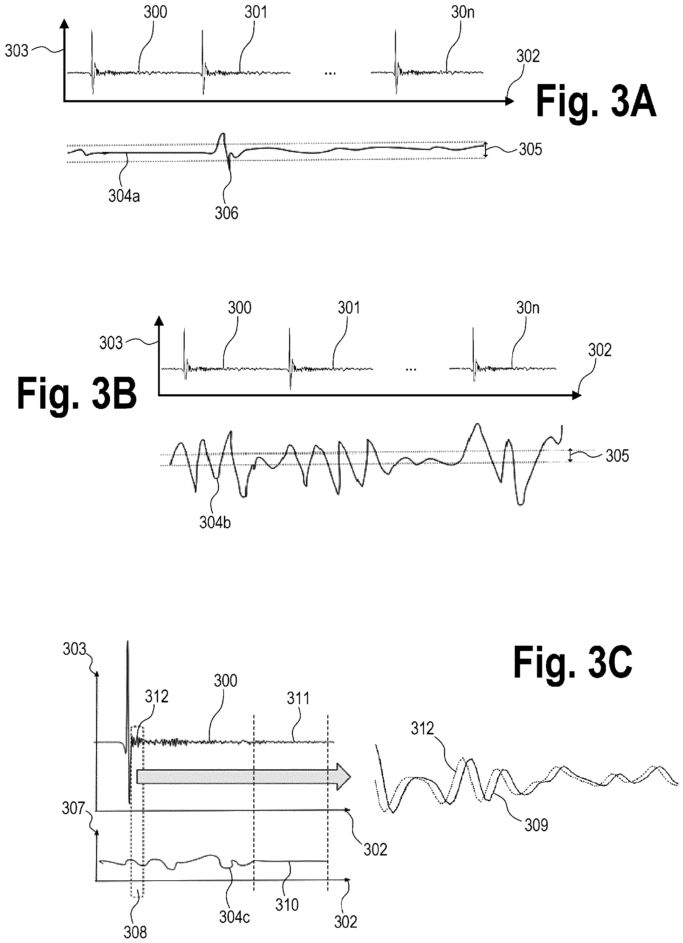

Scanner unit 101 and detector unit 102 may operate simultaneously to obtain terahertz-based measurements (by the scanner unit 101) and measurements quantifying potentially distorting conditions (by the detector unit 102). With such two types of measurements obtained simultaneously, measurements taken by the scanner unit 101 may be qualified as taken under good or bad (i.e. favourable or unfavourable) distortion condition(s). As explained in detail in other parts of the disclosure, if it is determined that whole or part of an interaction radiation has been measured under negligible, acceptable or inacceptable distorting conditions, said whole or part of the interaction radiation may be unaltered, modulated or discarded, respectively. This determination of negligible, acceptable or inacceptable distorting conditions may be performed, as detailed in other parts of the disclosure, based on theoretically or experimentally predefined threshold(s) or range(s) or outputted by suitably trained machine learning module. Detailed examples of such negligible, acceptable or inacceptable distorting situations are described in other parts of the disclosure with reference to Figures 3A - 3C.

Measured potentially distorting condition(s) outputted by detector unit 102 may include a classification of the type and/or severity of the potentially distorting condition(s). The severity may be determined by, e.g.,

magnitude thresholds. In case the magnitude is lower than a certain value no action may be applied. Discard/repeat actions may be applied to different extents such as, e.g., at interaction radiation measurement/signal (i.e. individual) level or part thereof or at measurement/signal batch (i.e. multi-measurement/signal) level.

In relation to temperature and/or humidity measurements as potentially distorting condition(s), they may also affect the interaction radiation measured by the scanner unit 101. In implementations aimed at inspecting a layered structure (e.g. coating), temperature and/or humidity magnitude(s) may also influence determined thicknesses or any other feature(s) of the layers forming the layered structure or composition. Different temperature and/or humidity condition(s) may affect the target item (under inspection) and/or operation of the scanner unit 101. For example, drying state of the layers and, hence, interaction of the scanning radiation with or between adjacent layers may influence measurement(s) to be computed by determiner unit 103. Effective layer thicknesses may thus be affected consequently, i.e. depending on temperature and/or humidity measurement(s). Although some of more or less environmental-sensitive components in contactless determiner(s), and/or in manufacturing line(s) including or cooperatively working therewith, may be included or includable in climatized cabinet(s) or similar, there may be other components (e.g. in measurement headers or fibers in, e.g., umbilical cable) that are not protected or protectable in this manner. These other components may thus be affected by temperature and/or humidity as potentially distorting condition(s).

As used herein, the term "module" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding methods of contactless determining a physical feature of a target item proposed herein, and/or to other components that may be local or remote to one another. Additionally, the modules may be moved from one device and added to another device, and/or may be included in both devices, associated to corresponding methods of contactless determining a physical feature of a target item proposed herein. Any software implementations may be tangibly embodied in one or more storage media, such as e.g. a memory device, a floppy disk, a compact disk (CD), a digital versatile disk (DVD), or other devices that may store computer code.

The methods of contactless determining a physical feature of a target item according to present disclosure may be implemented by computing means, electronic means or a combination thereof. The computing means may be a set of instructions (e.g. a computer program) and then methods of contactless determining a physical feature of a target item may comprise a memory and a processor, embodying said set of instructions stored in the memory and executable by the processor. These instructions may comprise functionality or functionalities to execute corresponding methods of contactless determining a physical feature of a target item such as e.g. the ones described with reference to other figures.

In case the methods of contactless determining a physical feature of a target item are implemented only by electronic means, a controller of the system may be, for example, a CPLD (Complex Programmable Logic Device), an FPGA (Field Programmable Gate Array) or an ASIC (Application-Specific Integrated Circuit).

In case the methods of contactless determining a physical feature of a target item are a combination of electronic and computing means, the computing means may be a set of instructions (e.g. a computer program) and the electronic means may be any electronic circuit capable of implementing corresponding steps of the methods of contactless determining a physical feature of a target item proposed herein, such as the ones described with reference to other figures.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing the methods of contactless determining a physical feature of a target item according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, the methods of contactless determining a physical feature of a target item proposed herein.

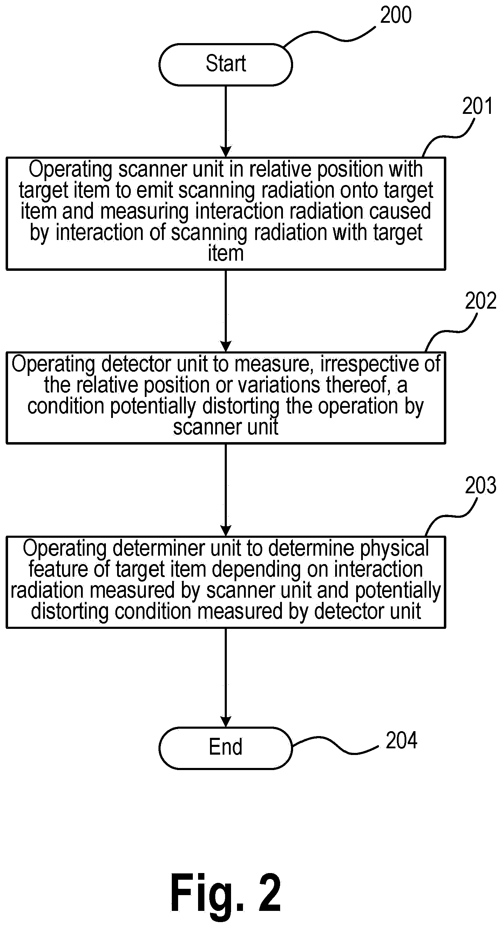

Figure 2 is a flow chart schematically illustrating methods of contactless determining a physical feature of a target item according to examples. As generally shown in the figure, contactless determination methods may be initiated (e.g. at block 200) upon detection of a starting condition such as e.g. a request for starting the method or an invocation of the method from operator interface or the like. Since contactless determination methods according to Figure 2 are performable by systems according to previous figure, number references from Figure 1 may be reused in following description of Figure 2.

Contactless determination methods may further include (e.g. at block 201) operating a terahertz scanner unit 101 according to a relative position 111 between target item 105 and scanner unit 101. Positioning system 104 may be responsible for arranging scanner unit 101 according to the relative position 111. Said operation of the scanner unit 101 may include emitting a terahertz scanning radiation 107 onto the target item 105 and measuring an interaction radiation 108 caused by interaction of the terahertz scanning radiation 107 with the target item 105. This functionality implemented or implementable at block 201 may be performed by e.g. scanner unit 101 previously described with reference to Figure 1. Functional details and considerations explained about said scanner unit 101 may thus be similarly attributed or attributable to method block 201.

Contactless determination methods may still further include (e.g. at block 202) operating a detector unit 102 including one or more measurers 109, 110 to measure vibrations at supporting system 106 or positioning system 104 as part of a condition potentially distorting the operation by the scanner unit 101. This functionality implemented or implementable at block 202 may be performed by e.g. a detector such as detector unit 102 previously described with reference to Figure 1. Functional details and considerations explained about said detector unit 102 may thus be similarly attributed or attributable to method block 202.

Contactless determination methods may yet further include (e.g. at block 203) operating a determiner unit 103 to determine the physical feature of the target item 105 depending on the interaction radiation 108 measured by the scanner unit 101 and the potentially distorting condition measured by the detector unit 102. This functionality implemented or implementable at block 203 may be performed by e.g. determiner unit or module 103 previously described with reference to other Figures. Functional details and considerations explained about said determiner module 103 may thus be similarly attributed or attributable to method block 203.

Contactless determination methods may terminate (e.g. at block 204) when an ending condition is detected such as e.g. once feature(s) of the target item 105 have been determined, reception of a user termination request, shutdown or deactivation of the contactless determiner performing the method, etc.

Figures 3A - 3C schematically illustrate terahertz-based measurements taken by scanner unit 101, potentially distortional measurements taken by detector unit 102, and consequent actions taken by determiner unit 103 depending thereon, according to examples. In these figures, measurement signals 300 - 30n, 304a - 304c taken simultaneously by scanner unit 101 and detector unit 102 are shown according to two dimensions: time 302 and interaction radiation (e.g. THz) 303 in the case of those taken by scanner unit 101, and time 302 and vibration/motion (e.g. micrometres) 307 in the case of those taken by detection unit 102. Vibration/motion (e.g. micrometres) dimension 307 is only shown in Figure 3C, but it may be similarly assumed for other Figures 3A and 3B.

For reasons of simplicity and understanding, Figures 3A - 3C illustrate very few measurements/signals but, in real applications, large quantities of measurements/signals may be taken to, e.g., obtain more accurate and/or reliable results. In some applications, several (or many) measurements may be taken of/from single point or different (or many) points of the target item. In examples of taking several (or many) measurements of/from single point, said measurements may be averaged such that resulting average measurement may provide more accurate or reliable information to be used to determine the feature of the target item. Moreover, if several (or many) measurements are taken, some of them may be discarded (as explained in other parts of the disclosure) while keeping good accuracy or reliability of the information obtained from non-discarded measurements.

Figures 3A and 3B illustrate three measurements (or parts or bursts or signals) of interaction radiation 300 - 30n and a single measurement/signal of potentially distorting condition 304a, 304b spanning the three measurements/signals 300 - 30n along time 302. Figure 3C is similar to 3A and 3B but differing in that 3C shows a single measurement/signal 300 of measured interaction radiation. Figures 3A and 3B also show an acceptability or admissibility threshold or range 305 to be used by determiner unit 103 for assessing measured potentially distortional condition 304a, 304b and actuating accordingly on measured interaction radiation(s) 300 - 30n.

In the particular example(s) of Figure 3A, measurement/signal 301 may be discarded (by determiner unit 103) because it coincides in time with (or has been measured at same time as) a part or portion or fragment 306 of the potentially distorting condition 304a exceeding the acceptability or admissibility threshold or range 305. Alternatively, instead of discarding the whole measurement/signal 301, only that part of the measurement/signal 301 affected by the "distortional" part 306 of the potentially distorting condition 304a may be discarded, and the rest of the measurement/signal 301 may be maintained for its subsequent processing. Such a decision of discarding whole or only part of an interaction radiation measurement/signal 301 may be based on, as explained in other parts of the disclosure, further threshold(s) or range(s) to determine whether the inacceptable distortion 306 affects whole or part of the interaction radiation 301, whether said affectation is meaningful or rather negligible, etc. In case of whole or meaningful part of the interaction radiation 301 is estimated useless, whole interaction radiation 301 may be discarded. Otherwise, whole or meaningful useful part of the interaction radiation 301 may be kept as valid and, therefore, usable by the determiner unit 103 to determine the physical feature of the target item. Other measurements/signals 300, 30n are shown as examples of valid or usable measurements/signals, since they have been measured during potentially distorting condition 304a within acceptability or admissibility threshold or range 305.

In the specific case of Figure 3B, all three interaction radiation measurements/signals 301 - 30n are shown as invalid or useless since they have been measured (by scanner unit 101) during very distorting condition(s) 304b, i.e. generally or prominently outside acceptability or admissibility threshold or range 305. In this case, scanner unit 101 may be operated to emit new scanning radiation(s) 107 and sense corresponding interaction radiation(s) 108 or, in other words, restart new operation cycle of the contactless determiner 100 ideally under less distorting condition(s). If several operational cycles of the contactless determiner 100 are performed with inacceptable interaction radiation measurements/signals 301 - 30n, it may be concluded that something wrong is occurring (in e.g. manufacturing line) that must be resolved. Once problem(s) causing inacceptable distorting condition(s) has (have) been resolved, operation of the contactless determiner 100 may be restarted along with, e.g., manufacturing line.

With respect to Figure 3C, single interaction radiation measurement/signal 300 is shown which may be qualified as occurred during admissible potentially distorting condition 304c. Then, in this scenario, measurement/signal 300 may be generally determined as acceptable and, hence, usable by determiner unit 103 to conclude about the physical property of the target item. It is particularly shown in this figure how a part 312 of the interaction radiation measurement/signal 300 (within time window 308) may be modulated by, e.g., applying corresponding correction factor or offset depending on acceptable distortion 304c, thereby obtaining a modulated interaction radiation 309 to be used in determining the physical feature. Figure 3C further shows a substantially negligible distortion condition 310, in which case the interaction radiation 311 measured as occurred at same time may be kept unaltered to determine the physical property of the target item. Such a modulation or correction may be a time-base correction at sample or measurement level. Comparison between measured interaction radiation (dashed line) 312 and modulated/corrected interaction radiation (continuous line) 309 is shown at right side of Figure 3C.

As denoted by Figures 3A - 3C, whole or part of one or more interaction radiation measurements/signals 300 - 30n may be discarded, or kept unaltered, or modulated, or repeated, or any other described action, or combination thereof depending on potentially distorting condition(s) 304a - 304c measured by detector unit 102. In contactless determiners 100 aimed at inspecting layered structures (e.g. coatings), such action or actions to be taken by, e.g., determiner unit 103 may (or may not) depend on measurement point (at which scanning radiation interacts with target item to produce interaction radiation), layers definition, etc. In implementations in which action(s) to be taken depend on measurement point and/or layers specification, one or more acceptability or permissibility or compliance thresholds may be predefined depending on such parameter(s) (i.e. measurement point and/or layers definition) to determine which action or actions are to be taken. For example, since position and/or curvature of/at measurement point may make thickness result(s) more or less susceptible to distortional condition(s), said properties of the target item at measurement point may be considered to define the cited threshold(s). Layer specs (e.g. material type) may also require having different of such thresholds.

Type classification of potentially distorting condition(s) may lead to or trigger action(s) such as discarding, modulating or correcting or adjusting, keeping unaltered, etc. some or all the data outputted and/or computed by scanner unit 101 (e.g., interaction radiation 108 or intermediate data associated thereto), repeating measurement(s), generating an error or warning (to e.g. main system or user thereof), etc. In implementations aimed at measuring layered structure(s) such as, e.g., layered coating(s), thicknesses correction or adjustment may be performed at layer level, i.e. for each of the layers forming the layered structure or composition.

A correction (or adjustment) characteristic function may be used by determiner unit 103 to perform the aforementioned classification and accordingly trigger actions defined above. Such an adjustment characteristic function may be determined by or based on artificial intelligence (AI). This AI-based approach may be based on a machine learning module (e.g., neural network) such as the one(s) described in other parts of the disclosure. For example, a set of measurements, under different conditions, during several days etc. may be defined or taken. This set of measurements may be made or defined for each individual measurement point. A first reference measurement may be taken over that same point under no potentially distorting conditions. These campaigns of measurements may be designed to teach AI algorithms (e.g. machine learning module) to determine action(s) to perform depending on corresponding inputs.

In the present disclosure, scanner unit 101 and detector unit 102 have been described as measurers of interaction radiation(s) 108 and potentially distorting condition(s), respectively, both to be used by determiner unit 103 to determine the physical feature of the target item 105. This has been described in this manner for reasons of simplicity. However, scanner unit 101 may actually generate a signal (e.g., electrical signal) representing or defining the detected interaction radiation 108 that is interpretable and processable by determiner unit 103. Similarly, detector unit 102 may actually generate a signal (e.g., electrical signal) representing or defining the detected potentially distorting condition that is also interpretable and processable by determiner unit 103. Examples of such signals are the ones of Figures 3A - 3C. Since this aspect is well-known in the field, no details thereon have been provided in present disclosure.

In present description, examples have been provided with one potentially distorting signal, but it is also possible to consider several potentially distorting signals from several sensors or measurers. In this multi-signal scenario, a modulation, correction or adjustment (based on, e.g., correction factor or offset) or non-alteration may be determined for each of the considered potentially distorting signals. These adjustments may then be applied (by, e.g., interaction radiation conditioner) to adjust the interaction radiation signal and/or (by, e.g., feature determiner) to determine the physical feature of the target item depending only on adjusted interaction radiation signal (single distortional approach), or on unaltered interaction radiation signal and potentially distorting signal (unalterable interaction approach), or on adjusted interaction radiation signal and potentially distorting signal (double distortional approach).

In multi-signal scenarios, an adjustment characteristic function such as the one(s) explained in other parts of the description may be defined and used. Adjustment characteristic function may be configured to output vibration type(s) and corresponding action(s) to be performed depending on input data including various signals from detector unit and possibly other parameters such as, e.g., measurement point specs, target item specs, etc. Measurement point specs refers to point specs of the target item that is radiated by scanner unit for its inspection such as, e.g., location of the point(s) to be inspected, surface curvature at the point(s) to be inspected, etc. Target item specs refers to specifications or properties of the target item that may influence the measurement performed by the scanner unit such as, e.g., material of the target item, number of layers to be inspected, material per layer (i.e. at layer level), etc. Adjustment characteristic function may be implemented by machine learning module as described in other parts of the disclosure. AI and/or blind source separation (BSS) and/or sensor fusion techniques may be applied to determine diagnosis and correction to undertake.

Examples of the adjustment characteristic function may thus be expressed in following manner:

$$VT, A = f\,(S1...Sn, MP, IS)$$

wherein:

    VT refers to Vibration Type(s),
    A refers to Action(s) to be performed according to VT,
    S1...Sn refers to sensor signals outputted by detector unit,
MP refers to Measuring Point specs, and
IS refers to Item Specs (or specs of the target item).

Sensor signals (S1...Sn) outputted by detector unit may include, e.g., vibration signals, temperature signals, humidity signals, etc. Action or actions may be those explained in other parts of the description.

Different threshold levels may be determined depending on measurement point and/or specification of the target item. For example, position and curvature of measurement point may cause the target item to be more or less susceptible to vibration. Specs of the target item may also make necessary to have different thresholds. Output of the adjustment characteristic function may include, e.g., a classification of the type and/or severity of the potentially distorting vibration, humidity, temperature, etc. Severity of a potentially distorting condition may be determined depending on magnitude thresholds. For example, if magnitude of a potentially distorting condition is within or outside certain magnitude threshold or range no action or some action may be triggered or applied, respectively. Actions (of, e.g., discarding or repeating measurement) may be applied to different extents such as, e.g., at sample or individual or signal/measurement batch level. A final vibration type classification may conclude actions such as discarding some or all signals or measurements from scanner unit, repeating measurement by scanner unit, sending an error or a warning to general cell system etc. Applying a correction or not may depend on the severity (thresholds).

In the particular case of contactless determiners aimed at measuring layer thicknesses, adjustment characteristic function may be expressed in following manner:

$$VT, TC = f (S1...Sn, MP, LS)$$

wherein:

VT refers to Vibration Type(s),
TC refers to Thickness correction(s) to be applied according to VT,
S1...Sn refers to sensor signals from detector unit,
MP refers to Measuring Point, and
LS refers to Layer Specs (or definition).

Correction of measured thicknesses may be applied at layer level, i.e. to each layer of the multi-layer composition to be inspected. Such per-layer corrections may be expressed in following manner:

+offset_1 [u] for layer 1
+offset_2 [u] for layer 2
+offset_n [u] for layer n

Correction to be applied may depend (or not) on measurement point and/or layer specs. Different threshold levels may be determined depending on measurement point or layer specs.

Although only a number of examples have been disclosed herein, other alternatives, modifications, uses and/or equivalents thereof are possible. Furthermore, all possible combinations of the described examples are also covered. Thus, the scope of the disclosure should not be limited by particular examples, but it should be determined only by a fair reading of the claims that follow.

**Claims**

1. System (100) for contactless determining a physical feature of a target item, the system comprising a terahertz scanner unit (101), a detector unit (102) and a determiner unit (103); wherein

   the terahertz scanner unit (101) is configured to operate according to a relative position (111) between the target item (105) and the terahertz scanner unit (101), said operation including emitting a terahertz scanning radiation (107) onto the target item (105) and measuring an interaction radiation (108, 300 - 30n) caused by interaction of the terahertz scanning radiation (107) with the target item (105); wherein
   the detector unit (102) includes one or more vibration measurers (109, 110) couplable to a supporting system (106) configured to support or hold the target item (105) or to a positioning system (104) configured to position the terahertz scanner unit (101) in or at the relative position (111), so as to measure vibrations at the supporting system (106) or the positioning system (104) as part of a condition potentially distorting the operation of the terahertz scanner unit (101); and wherein
   the determiner unit (103) is configured to determine the physical feature of the target item (105) depending on the interaction radiation (108, 300 - 30n) measured by the terahertz scanner unit (101) and the potentially distorting condition (304a, 304b) measured by the detector unit (102).

2. System for contactless determining a physical feature of a target item (105) according to claim 1, wherein the determiner unit (103) is configured to determine the physical feature of the target item (105) by adjusting the interaction radiation (108, 300 - 30n) and determining the physical feature of the target item (105) depending on the adjusted interaction radiation and the potentially distorting condition (304a, 304b), said adjusting of the interaction radiation (108, 300 - 30n) including:

   determining whether a part of the potentially distorting condition (304a, 304b) is outside acceptability threshold or range (305) and, therefore, corresponds to an unacceptable distortion (306), or is inside acceptability threshold or range (305) and, therefore, corresponds to an acceptable distortion, or is inside negligibility threshold or range (305) and, therefore, corresponds to a negligible distortion (310); and
in case of unacceptable distortion (306), determining which part of the interaction radiation (108, 300 - 30n) corresponds in time to said unacceptable distortion (306) and discarding said part of the interaction radiation (301) from the adjusted interaction radiation,
in case of acceptable distortion (300), determining which part of the interaction radiation (108, 300 - 30n) corresponds in time to said acceptable distortion (300) and modulating said part of the interaction radiation depending on said acceptable distortion (300), and
in case of negligible distortion (310), determining which part of the interaction radiation (108, 300 - 30n) corresponds in time to said negligible distortion (310) and keeping said part of the interaction radiation unaltered in the adjusted interaction radiation.

3. System for contactless determining a physical feature of a target item (105) according to claim 2, wherein the determiner unit (103) is configured to verify whether a ratio or accumulation or distribution of discarded part or parts (301) of the interaction radiation (108, 300 - 30n) is outside admissibility threshold or range (305) and, in said case, to trigger operation of the terahertz scanner unit (101) to measure a new interaction radiation.

4. System for contactless determining a physical feature of a target item (105) according to any of claims 2 or 3, wherein the determiner unit (103) is configured to modulate the part of the interaction radiation corresponding in time to the acceptable distortion by applying to said part of the interaction radiation a correction factor or offset depending on the acceptable distortion (300).

5. System for contactless determining a physical feature of a target item (105) according to any of claims 2 to 4, wherein the determiner unit (103) is configured to process the adjusted interaction radiation depending on the potentially distorting condition (304a, 304b) based on applying a reparation or correction factor or offset depending on the potentially distorting condition.

6. System for contactless determining a physical feature of a target item (105) according to any of claims 1 to 5, wherein the determiner unit (103) includes a machine learning module trained or trainable to determine the physical feature of the target item (105) depending on the interaction radiation (108, 300 - 30n) measured by the scanner unit and the potentially distorting condition (304a, 304b) measured by the detector unit (102).

7. System for contactless determining a physical feature of a target item (105) according to claim 6, wherein the training of the machine learning module is performed or performable based on training data including all or some of interaction radiation data, potentially distorting condition data, feature data defining or describing the target item (105), physical feature data of the target item (105) that are expected to be outputted by the machine learning module.

8. System for contactless determining a physical feature of a target item (105) according to any of claims 1 to 7, wherein the supporting system (106) is a transport system or is coupled to a transport system, said transport system being configured to displace the target item (105) directly or indirectly through the supporting system (106).

9. System for contactless determining a physical feature of a target item (105) according to claim 8, wherein the transport system is configured to displace the target item (105) in a production line directly or indirectly through the supporting system (106).

10. System for contactless determining a physical feature of a target item (105) according to any of claims 1 to 9, wherein the detector unit (102) further includes one or more temperature measurers associable to or arrangeable at the target item (105) and/or at a vicinity of the target item (105) and/or at an environment including the target item (105), said one or more temperature measurers being configured to detect a temperature as part of the potentially distorting condition.

11. System for contactless determining a physical feature of a target item (105) according to any of claims 1 to 10, wherein the one or more measurers include one or more humidity measurers associable to or arrangeable at the target item (105) and/or at a vicinity of the target item (105) and/or at an environment including the target item (105), said one or more humidity measurers being configured to detect a humidity as part of the potentially distorting condition.

12. System for contactless determining a physical feature of a target item (105) according to any of claims 1 to 11, wherein the target item (105) is a coating of a coated object including one or more coating layers, the physical feature is or includes a layer condition of the one or more coating layers, and the layer condition is or includes a thickness of the one or more coating layers.

13. System for contactless determining a physical feature of a target item (105) according to any of claims 1 to 12, wherein the physical feature of the target item (105) includes an electrical parameter or a defect parameter of the target item (105).

14. Method of contactless determining a physical feature of a target item (105), the method comprising:

operating (201) a terahertz scanner unit (101) according to a relative position (111) between the target item (105) and the terahertz scanner unit (101), said operation including emitting a terahertz scanning radiation (107) onto the target item (105) and measuring an interaction radiation (108, 300 - 30n) caused by interaction of the terahertz scanning radiation (107) with the target item (105);
operating (202) a detector unit (102) including one or more vibration measurers (109, 110) coupled to a supporting system (106) to support or hold the target item (105) or to a positioning system (104) to position the terahertz scanner unit (101) in or at the relative position (111), so as to measure vibrations at the supporting system (106) or the positioning system (104) as part of a condition potentially distorting the operation of the terahertz scanner unit (101); and
operating (203) a determiner unit to determine the physical feature of the target item (105) depending on the interaction radiation (108, 300 - 30n) measured by the terahertz scanner unit (101) and the potentially distorting condition (304a, 304b) measured by the detector unit (102).

15. Computer program comprising program instructions for causing a computing system controlling a system (100) according to any of claims 1 -13 to perform a method according to claim 14 of contactless determining a physical feature of a target item (105).

**Patentansprüche**

1. System (100) zum berührungslosen Bestimmen eines physikalischen Merkmals eines Zielartikels, wobei das System eine Terahertz-Abtastereinheit (101), eine Detektoreinheit (102) und eine Bestimmungseinheit (103) umfasst; wobei

die Terahertz-Abtastereinheit (101) konfiguriert ist, um gemäß einer relativen Position (111) zwischen dem Zielartikel (105) und der Terahertz-Abtastereinheit (101) betrieben zu werden, wobei der Betrieb das Emittieren einer Terahertz-Abtaststrahlung (107) auf das Zielartikel (105) und das Messen einer Wechselwirkungsstrahlung (108, 300 - 30n), die durch eine Wechselwirkung der Terahertz-Abtaststrahlung (107) mit dem Zielartikel (105) verursacht wird, umfasst; wobei

die Detektoreinheit (102) einen oder mehrere Schwingungsmessvorrichtungen (109, 110) umfasst, die an ein Trägersystem (106), das konfiguriert ist, um das Zielartikel (105) zu tragen oder zu halten, oder an ein Positionierungssystem (104), das konfiguriert ist, um die Terahertz-Abtastereinheit (101) in oder an der relativen Position (111) zu positionieren, gekoppelt werden können, um Schwingungen an dem Trägersystem (106) oder dem Positionierungssystem (104) als Teil eines Zustands zu messen, der potenziell den Betrieb der Terahertz-Abtastereinheit (101) verzerrt; und wobei

die Bestimmungseinheit (103) dazu konfiguriert ist, das physikalische Merkmal des Zielartikels (105) in Abhängigkeit von der von der Terahertz-Abtastereinheit (101) gemessenen Wechselwirkungsstrahlung (108, 300 - 30n) und dem von der Detektoreinheit (102) gemessenen potenziell verzerrenden Zustand (304a, 304b) zu bestimmen.

2. System zum berührungslosen Bestimmen eines physikalischen Merkmals eines Zielartikels (105) nach Anspruch 1, wobei die Bestimmungseinheit (103) dazu konfiguriert ist, das physikalische Merkmal des Zielartikels (105) durch Einstellen der Wechselwirkungsstrahlung (108, 300 - 30n) und Bestimmen des physikalischen Merkmals des Zielartikels (105) in Abhängigkeit von der eingestellten Wechselwirkungsstrahlung und des potenziell verzerrenden Zustands (304a, 304b) zu bestimmen, wobei das Einstellen der Wechselwirkungsstrahlung (108, 300 - 30n) Folgendes beinhaltet:

bestimmen, ob ein Teil des potenziell verzerrenden Zustands (304a, 304b) außerhalb eines Akzeptanzschwellenwerts oder -bereichs (305) liegt und daher einer nicht annehmbaren Verzerrung (306) entspricht oder innerhalb eines Akzeptanzschwellenwerts oder -bereichs (305) liegt und daher einer akzeptablen Verzerrung entspricht oder innerhalb des Vernachlässigbarkeitsschwellenwerts oder - bereichs (305) liegt und daher einer vernachlässigbaren Verzerrung (310) entspricht; und
im Falle einer nicht annehmbaren Verzerrung (306), Bestimmen, welcher Teil der Wechselwirkungsstrahlung (108, 300 - 30n) zeitlich der nicht annehmbaren Verzerrung (306) entspricht, und Verwerfen des Teils der Wechselwirkungsstrahlung (301) aus der angepassten Wechselwirkungsstrahlung,

im Falle einer akzeptablen Verzerrung (300), Bestimmen, welcher Teil der Wechselwirkungsstrahlung (108, 300 - 30n) zeitlich der akzeptablen Verzerrung (300) entspricht, und Modulieren des Teils der Wechselwirkungsstrahlung in Abhängigkeit von der akzeptablen Verzerrung (300), und

im Falle einer vernachlässigbaren Verzerrung (310), Bestimmen, welcher Teil der Wechselwirkungsstrahlung (108, 300 - 30n) zeitlich der vernachlässigbaren Verzerrung (310) entspricht, und Beibehalten dieses Teils der Wechselwirkungsstrahlung in der angepassten Wechselwirkungsstrahlung unverändert.

3. System zum berührungslosen Bestimmen eines physikalischen Merkmals eines Zielartikels (105) nach Anspruch 2, wobei die Bestimmungseinheit (103) dazu konfiguriert ist, zu überprüfen, ob ein Verhältnis oder eine Ansammlung oder Verteilung von einem verworfenen Teil oder verworfenen Teilen (301) der Wechselwirkungsstrahlung (108, 300 - 30n) außerhalb des Zulässigkeitsschwellenwerts oder -bereichs (305) liegt, und in diesem Fall den Betrieb der Terahertz-Abtastereinheit (101) auszulösen, um eine neue Wechselwirkungsstrahlung zu messen.

4. System zum berührungslosen Bestimmen eines physikalischen Merkmals eines Zielartikels (105) nach einem der Ansprüche 2 oder 3, wobei die Bestimmungseinheit (103) konfiguriert ist, um den Teil der Wechselwirkungsstrahlung, der zeitlich der akzeptablen Verzerrung entspricht, durch Anwenden eines Korrekturfaktors oder einer Verschiebung ("Offset") in Abhängigkeit von der akzeptablen Verzerrung (300) auf den Teil der Wechselwirkungsstrahlung zu modulieren.

5. System zum berührungslosen Bestimmen eines physikalischen Merkmals eines Zielartikels (105) nach einem der Ansprüche 2 bis 4, wobei die Bestimmungseinheit (103) konfiguriert ist, um die eingestellte Wechselwirkungsstrahlung in Abhängigkeit von dem potenziell verzerrenden Zustand (304a, 304b) auf Grundlage des Anwendens eines Reparatur- oder Korrekturfaktors oder Verschiebung in Abhängigkeit von dem potenziell verzerrenden Zustand zu verarbeiten.

6. System zum berührungslosen Bestimmen eines physikalischen Merkmals eines Zielartikels (105) nach einem der Ansprüche 1 bis 5, wobei die Bestimmungseinheit (103) ein maschinelles Lernmodul beinhaltet, das trainiert oder trainierbar ist, um das physikalische Merkmal des Zielartikels (105) in Abhängigkeit von der durch die Abtastereinheit gemessenen Wechselwirkungsstrahlung (108, 300 - 30n) und dem durch die Detektoreinheit (102) gemessenen potenziell verzerrenden Zustand (304a, 304b) zu bestimmen.

7. System zum berührungslosen Bestimmen eines physikalischen Merkmals eines Zielartikels (105) nach Anspruch 6, wobei das Training des maschinellen Lernmoduls auf Grundlage von Trainingsdaten durchgeführt oder durchführbar ist, die alle oder einige von Wechselwirkungsstrahlungsdaten, potenziell verzerrenden Zustandsdaten, Merkmalsdaten, die das Zielartikel (105) definieren oder beschreiben, physikalischen Merkmalsdaten des Zielartikels (105), von denen erwartet wird, dass sie von dem maschinellen Lernmodul ausgegeben werden, beinhalten.

8. System zum berührungslosen Bestimmen eines physikalischen Merkmals eines Zielartikels (105) nach einem der Ansprüche 1 bis 7, wobei das Trägersystem (106) ein Transportsystem ist oder mit einem Transportsystem gekoppelt ist, wobei das Transportsystem konfiguriert ist, um das Zielartikel (105) direkt oder indirekt durch das Trägersystem (106) zu verschieben.

9. System zum berührungslosen Bestimmen eines physikalischen Merkmals eines Zielartikels (105) nach Anspruch 8, wobei das Transportsystem dazu konfiguriert ist, den Zielartikel (105) in einer Produktionslinie direkt oder indirekt durch das Trägersystem (106) zu verschieben.

10. System zum berührungslosen Bestimmen eines physikalischen Merkmals eines Zielartikels (105) nach einem der Ansprüche 1 bis 9, wobei die Detektoreinheit (102) ferner Folgendes umfasst:
eine oder mehrere Temperaturmessvorrichtungen, die dem Zielartikel (105) und/oder einer Nähe des Zielartikels (105) und/oder einer Umgebung, die das Zielartikel (105) beinhaltet, zugeordnet oder angeordnet werden können, wobei die eine oder die mehreren Temperaturmessvorrichtungen dazu konfiguriert sind, eine Temperatur als Teil des potenziell verzerrenden Zustands zu erfassen.

11. System zum berührungslosen Bestimmen eines physikalischen Merkmals eines Zielartikels (105) nach einem der Ansprüche 1 bis 10, wobei die eine oder die mehreren Messvorrichtungen Folgendes umfassen:
eine oder mehrere Feuchtigkeitsmessvorrichtungen, die dem Zielartikel (105) und/oder einer Nähe des Zielartikels (105) und/oder einer Umgebung, die das Zielartikel (105) beinhaltet, zugeordnet oder angeordnet werden können, wobei die eine oder die mehreren Feuchtigkeitsmessvorrichtungen dazu konfiguriert sind, eine Feuchtigkeit als Teil des potenziell verzerrenden Zustands zu erfassen.

12. System zum berührungslosen Bestimmen eines physikalischen Merkmals eines Zielartikels (105) nach einem der Ansprüche 1 bis 11, wobei das Zielartikel (105) eine Beschichtung eines beschichteten Objekts ist, das eine oder mehrere Beschichtungsschichten beinhaltet, das physikalische Merkmal ein Schichtzustand der einen oder mehreren Beschichtungsschichten ist oder beinhaltet und der Schichtzustand eine Dicke der einen oder mehreren Beschichtungsschichten ist oder beinhaltet.

13. System zum berührungslosen Bestimmen eines physikalischen Merkmals eines Zielartikels (105) nach einem der Ansprüche 1 bis 12, wobei das physikalische Merkmal des Zielartikels (105) einen elektrischen Parameter oder einen Defektparameter des Zielartikels (105) beinhaltet.

14. Verfahren zum berührungslosen Bestimmen eines physischen Merkmals eines Zielartikels (105), wobei das Verfahren Folgendes umfasst:

betreiben (201) einer Terahertz-Abtastereinheit (101) gemäß einer relativen Position (111) zwischen dem Zielartikel (105) und der Terahertz-Abtastereinheit (101), wobei der Betrieb das Emittieren einer Terahertz-Abtaststrahlung (107) auf das Zielartikel (105) und das Messen einer Wechselwirkungsstrahlung (108, 300 - 30n), die durch eine Wechselwirkung der Terahertz-Abtaststrahlung (107) mit dem Zielartikel (105) verursacht wird, beinhaltet;
betreiben (202) einer Detektoreinheit (102), die einen oder mehrere Schwingungsmessvorrichtungen (109, 110) beinhaltet, die an ein Trägersystem (106), um das Zielartikel (105) zu tragen oder zu halten, oder an ein Positionierungssystem (104) gekoppelt sind, um die Terahertz-Abtastereinheit (101) in oder an der relativen Position (111) zu positionieren, um Schwingungen an dem Trägersystem (106) oder dem Positionierungssystem (104) als Teil eines Zustands zu messen, der potenziell den Betrieb der Terahertz-Abtastereinheit (101) verzerrt; und
betreiben (203) einer Bestimmungseinheit, um das physikalische Merkmal des Zielartikels (105) in Abhängigkeit von der von der Terahertz-Abtastereinheit (101) gemessenen Wechselwirkungsstrahlung (108, 300 - 30n) und der von der Detektoreinheit (102) gemessenen potenziell verzerrenden Bedingung (304a, 304b) zu bestimmen.

15. Computerprogramm, das Programmanweisungen umfasst, um ein Rechensystem, das ein System (100) nach einem der Ansprüche 1 bis 13 steuert, zu veranlassen, ein Verfahren nach Anspruch 14 zum berührungslosen Bestimmen eines physikalischen Merkmals eines Zielartikels (105) durchzuführen.

**Revendications**

1. Système (100) pour déterminer sans contact une caractéristique physique d'un article cible, le système comprenant une unité de balayage térahertz (101), une unité de détection (102) et une unité de détermination (103) ; dans lequel

l'unité de balayage térahertz (101) est configurée pour fonctionner selon une position relative (111) entre l'élément cible (105) et l'unité de balayage térahertz (101), ladite opération comprenant l'émission d'un rayonnement de balayage térahertz (107) sur l'élément cible (105) et la mesure d'un rayonnement d'interaction (108, 300 - 30n) causé par l'interaction du rayonnement de balayage térahertz (107) avec l'élément cible (105) ; dans lequel
l'unité de détection (102) comprend un ou plusieurs mesureurs de vibrations (109, 110) pouvant être couplés à un système de support (106) configuré pour supporter ou maintenir l'élément cible (105) ou à un système de positionnement (104) configuré pour positionner l'unité de balayage térahertz (101) dans ou à la position relative (111), de manière à mesurer des vibrations au niveau du système de support (106) ou du système de positionnement (104) dans le cadre d'une condition susceptible de distordre le fonctionnement de l'unité de balayage térahertz (101) ; et dans lequel
l'unité de détermination (103) est configurée pour déterminer la caractéristique physique de l'élément cible (105) en fonction du rayonnement d'interaction (108, 300 - 30n) mesuré par l'unité de balayage térahertz (101) et de la condition susceptible de distordre (304a, 304b) mesurée par l'unité de détection (102).

2. Système pour déterminer sans contact une caractéristique physique d'un élément cible (105) selon la revendication 1, dans lequel l'unité de détermination (103) est configurée pour déterminer la caractéristique physique de l'élément cible (105) en ajustant le rayonnement d'interaction (108, 300 - 30n) et en déterminant la caractéristique physique de l'élément cible (105) en fonction du rayonnement d'interaction ajusté et de la condition susceptible de distordre (304a, 304b), ledit ajustement du rayonnement d'interaction (108, 300 - 30n) comprenant :

déterminer si une partie de la condition susceptible de distordre (304a, 304b) est en dehors du seuil ou de la plage d'acceptabilité (305) et, par conséquent, correspond à une distorsion inacceptable (306), ou est à l'intérieur du seuil ou de la plage d'acceptabilité (305) et, par conséquent, correspond à une distorsion acceptable, ou est à l'intérieur du seuil ou de la plage de négligence (305) et, par conséquent, correspond à une distorsion négligeable (310) ; et
en cas de distorsion inacceptable (306), déterminer quelle partie du rayonnement d'interaction (108, 300 - 30n) correspond dans le temps à ladite distorsion inacceptable (306) et éliminer ladite partie du rayonnement d'interaction (301) du rayonnement d'interaction ajusté,
en cas de distorsion acceptable (300), déterminer quelle partie du rayonnement d'interaction (108, 300 - 30n) correspond dans le temps à ladite distorsion acceptable (300) et moduler ladite partie du rayonnement d'interaction en fonction de ladite distorsion acceptable (300), et
en cas de distorsion négligeable (310), déterminer quelle partie du rayonnement d'interaction (108, 300 - 30n) correspond dans le temps à ladite distorsion négligeable (310) et garder ladite partie du rayonnement d'interaction inchangée dans le rayonnement d'interaction ajusté.

3. Système pour déterminer sans contact une caractéristique physique d'un article cible (105) selon la revendication 2, dans lequel l'unité de détermination (103) est configurée pour vérifier si un rapport ou une accumulation ou une distribution de la ou des parties rejetées (301) du rayonnement d'interaction (108, 300 - 30n) est en dehors du seuil ou de la plage d'admissibilité (305) et, dans ledit cas, pour déclencher le fonctionnement de l'unité de balayage térahertz (101) pour mesurer un nouveau rayonnement d'interaction.

4. Système pour déterminer sans contact une caractéristique physique d'un élément cible (105) selon l'une quelconque des revendications 2 ou 3, dans lequel l'unité de détermination (103) est configurée pour moduler la partie du rayonnement d'interaction correspondant dans le temps à la distorsion acceptable en appliquant à ladite partie du rayonnement d'interaction un facteur de correction ou un décalage en fonction de la distorsion acceptable (300).

5. Système pour déterminer sans contact une caractéristique physique d'un article cible (105) selon l'une quelconque des revendications 2 à 4, dans lequel l'unité de détermination (103) est configurée pour traiter le rayonnement d'interaction ajusté en fonction de la condition susceptible de distordre (304a, 304b) sur la base de l'application d'un facteur de réparation ou de correction ou d'un décalage en fonction de la condition susceptible de distordre.

6. Système pour déterminer sans contact une caractéristique physique d'un article cible (105) selon l'une quelconque des revendications 1 à 5, dans lequel l'unité de détermination (103) comprend un module d'apprentissage automatique formé ou pouvant être formé pour déterminer la caractéristique physique de l'article cible (105) en fonction du rayonnement d'interaction (108, 300 - 30n) mesuré par l'unité de balayage et de condition susceptible de distordre (304a, 304b) mesuré par l'unité de détection (102).

7. Système pour déterminer sans contact une caractéristique physique d'un élément cible (105) selon la revendication 6, dans lequel l'entraînement du module d'apprentissage automatique est effectué ou peut être effectué sur la base de données d'entraînement comprenant toutes ou une partie parmi des données de rayonnement d'interaction, des données de condition susceptible de distordre, des données de caractéristique définissant ou décrivant l'élément cible (105), des données de caractéristique physique de l'élément cible (105) qui sont censées être sorties par le module d'apprentissage automatique.

8. Système pour déterminer sans contact une caractéristique physique d'un article cible (105) selon l'une quelconque des revendications 1 à 7, dans lequel le système de support (106) est un système de transport ou est couplé à un système de transport, ledit système de transport étant configuré pour déplacer l'article cible (105) directement ou indirectement à travers le système de support (106).

9. Système pour déterminer sans contact une caractéristique physique d'un article cible (105) selon la revendication 8, dans lequel le système de transport est configuré pour déplacer l'article cible (105) dans une ligne de production directement ou indirectement à travers le système de support (106).

10. Système pour déterminer sans contact une caractéristique physique d'un article cible (105) selon l'une quelconque des revendications 1 à 9, dans lequel l'unité de détection (102) comprend en outre un ou plusieurs mesureurs de température pouvant être associés ou agencés au niveau de l'élément cible (105) et/ou au voisinage de l'élément cible (105) et/ou au niveau d'un environnement comprenant l'élément cible (105), lesdits un ou plusieurs mesureurs de température étant configurés pour détecter une température dans le cadre de la condition susceptible de distordre.

11. Système pour déterminer sans contact une caractéristique physique d'un élément cible (105) selon l'une quelconque des revendications 1 à 10, dans lequel le ou les mesureurs comprennent

un ou plusieurs mesureurs d'humidité pouvant être associés ou agencés au niveau de l'élément cible (105) et/ou au voisinage de l'élément cible (105) et/ou au niveau d'un environnement comprenant l'élément cible (105), lesdits un ou plusieurs mesureurs d'humidité étant configurés pour détecter une humidité dans le cadre de la condition susceptible de distordre.

12. Système pour déterminer sans contact une caractéristique physique d'un article cible (105) selon l'une quelconque des revendications 1 à 11, dans lequel l'article cible (105) est un revêtement d'un objet revêtu comprenant une ou plusieurs couches de revêtement, la caractéristique physique est ou comprend une condition de couche de la ou des couches de revêtement, et la condition de couche est ou comprend une épaisseur de la ou des couches de revêtement.

13. Système pour déterminer sans contact une caractéristique physique d'un article cible (105) selon l'une quelconque des revendications 1 à 12, dans lequel la caractéristique physique de l'article cible (105) comprend un paramètre électrique ou un paramètre de défaut de l'article cible (105).

14. Procédé de détermination sans contact d'une caractéristique physique d'un élément cible (105), le procédé comprenant :

faire fonctionner (201) une unité de balayage térahertz (101) selon une position relative (111) entre l'élément cible (105) et l'unité de balayage térahertz (101), ladite opération comprenant l'émission d'un rayonnement de balayage térahertz (107) sur l'élément cible (105) et la mesure d'un rayonnement d'interaction (108, 300 - 30n) provoqué par l'interaction du rayonnement de balayage térahertz (107) avec l'élément cible (105) ;
faire fonctionner (202) une unité de détection (102) comprenant un ou plusieurs mesureurs de vibrations (109, 110) couplés à un système de support (106) pour supporter ou maintenir l'élément cible (105) ou à un système de positionnement (104) pour positionner l'unité de balayage térahertz (101) dans ou à la position relative (111), de manière à mesurer les vibrations au niveau du système de support (106) ou du système de positionnement (104) dans le cadre d'une condition susceptible de distordre le fonctionnement de l'unité de balayage térahertz (101) ; et
faire fonctionner (203) une unité de détermination pour déterminer la caractéristique physique de l'élément cible (105) en fonction du rayonnement d'interaction (108, 300 - 30n) mesuré par l'unité de balayage térahertz (101) et de la condition susceptible de distordre (304a, 304b) mesurée par l'unité de détection (102).

15. Programme informatique comprenant des instructions de programme pour amener un système informatique contrôlant un système (100) selon l'une quelconque des revendications 1 à 13 à exécuter un procédé selon la revendication 14 consistant à déterminer sans contact une caractéristique physique d'un élément cible (105).

**Fig. 1**

Fig. 2

303

300    301    30n

302

# Fig. 3A

305

304a

306

300    301    30n

303

302

# Fig. 3B

305

304b

303

# Fig. 3C

312    300    311

312

302

307

309

310

308    304c    302

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22382343

- US 2015211934 A1